# EUROPEAN PATENT SPECIFICATION

(11) **EP 1 310 171 B1**
(45) Date of publication and mention of the grant of the patent: **14.04.2004**
(21) Application number: 03001705.7
(22) Date of filing: 22.05.1998
(51) Int. Cl.: A22C 11/10

(54) **Meat emulsion pump control system for meat encasing machine, and method of use thereof**
Fleischemulsionspumpe, Kontrollsystem für Fleischabfüllmaschine sowie Verfahren zu deren Verwendung
Système de commande de pompe à émulsion de produits carnés pour machine de remplissage de boyau et procédé d'utilisation

(30) Priority: 23.05.1997 US 47487; 29.10.1997 US 959583; 08.01.1998 US 4361
(43) Date of publication of application: 14.05.2003
(62) Divisional of application: 98923618.7
(73) Proprietor: TOWNSEND ENGINEERING COMPANY, Des Moines, IA 50317 (US)
(72) Inventor: Simpson, Michael S., Des Moines, Iowa 50317 (US); Hamblin, David, Des Moines, Iowa 50317 (US); Hergott, Steven P., Des Moines, Iowa 50317 (US); Veldkamp, Brent M., Des Moines, Iowa 50317 (US)
(74) Representative: Gilmour, David Cedric Franklyn

(56) References cited:
- EP-A- 0 395 177
- EP-A- 0 498 483
- WO-A-88/07819
- WO-A-98/17119
- FR-A- 2 620 902

## Description

### BACKGROUND OF THE INVENTION

Meat encasing machines have a linker which uses a meat emulsion pump connected to a stuffing tube upon which a shirred casing is mounted. From e.g. EP-A-0 498 483 such a machine is known. Meat emulsion is extruded from the stuffing tube into the casing and the filled casing is rotated by means of a chuck and delivered to a linker for creating a linked strand of sausages. The linked strand then passes through a rotating looping horn and loops of sausages from the strand are deposited on hooks of a conveyor located downstream from the horn. These conventional machines mechanically connect the operation of the horn and the conveyor to coordinate their respective functions. Special attention then must be given to coordinate the action of the pump with respect to the horn and the conveyor.

A cycle of the foregoing machine is completed as each "stick" of shirred casing is filled, and the pump is disengaged. The "stopped" portion of the horn needs to be assessed before a new cycle with a new shirred casing stick is implemented. While the down time between cycles is brief, in the order of 2 to 4 seconds or more of an 18 second cycle, this down time contributes to the inefficiency of the overall operation.

It is therefore a proposed object of this invention to reduce the down time between cycles in the operation of a sausage encasing machine.

It is a further object of the invention to simplify the operation of the pump clutch from cycle to cycle so as to reduce the down time between cycles.

### SUMMARY OF THE INVENTION

The home position of the looper horn, linking chain and conveyor prior to production of a meat encasing machine are determined. A pulsed signal is generated as the looper horn rotates and is transmitted to an amplifier from an encoder on the servo motor for the looper horn and the conveyor. The output pulse signal is then reduced in frequency so that it can be read by a PLC. The PLC counts the pulses in the signal and can determine the relative position of the looper horn based on the count and can therefore minimize the rotation of the looper horn in the home position at the beginning of each new cycle.

In an alternate embodiment, no direct mechanical or electrical interaction between the linking chain axis and the conveyor motor axis exists. In the alternate embodiment a plurality of servo-motors precisely control the operation of the linking chains, the looper, and the conveyor.

### BRIEF DESCRIPTION OF THE DRAWINGS

Figure 1 is a schematic drawing of the components of a meat encasing machine of the prior art;
Figure 2 is a schematic front elevational drawing of the looper horn of Figure 1;
Figure 3 is a schematic front elevational drawing of the looper horn of Figure 1 showing variable positions thereof;
Figure 4 is a schematic drawing of the components of a meat encasing machine of an alternative embodiment of this invention; and
Figure 5 is a schematic drawing of the components of a meat encasing machine of another alternative embodiment of this invention.

### DETAILED DESCRIPTION OF THE PREFERRED EMBODIMENT

The present invention will be described as it applies to its preferred embodiment.

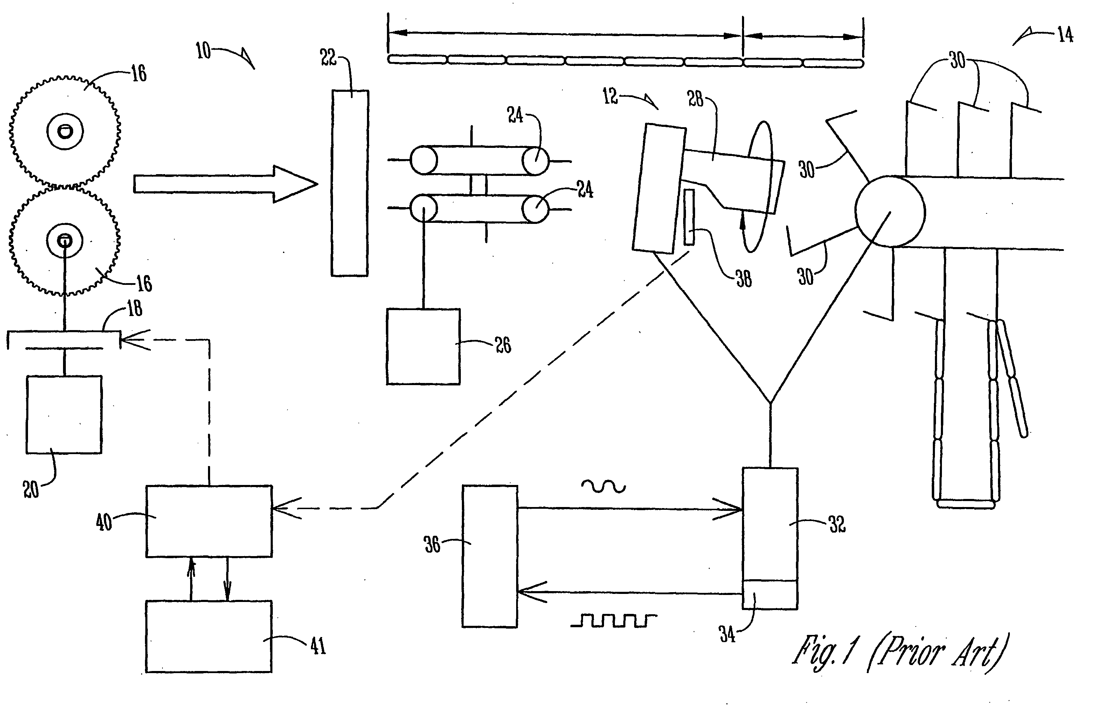

Figures 1-3 show a prior art machine of which the instant invention is an improvement. Figure 1 is a diagram showing a linking machine 10, a looper 12, and a conveyor 14. As shown, the linker 10 includes a pair of pump metering gears 16 which are engaged or disengaged by a pump clutch 18. The pump motor 20 is used to drive the pump metering gears 16. The linker 10 also includes a twister 22 positioned upstream from the linking chains 24. The linking chains 24 are driven by a linker motor 26. As the links of meat product are linked by the linker 10, they are fed through a looper horn 28 which rotates in order to hang a predetermined number of links between a number of hooks 30 which are formed on the conveyor 14. As the horn 28 rotates, the conveyor moves so that the hooks 30 pick up a loop comprised of a predetermined number of links.

Figure 1 also shows the system that controls the linker 10, the looper 12, and the conveyor 14. The looper 12 and conveyor 14 are both precisely controlled by a servo motor 32. Operatively coupled to the servo motor 32 is a servo encoder 34 which creates a quadrature feedback pulsed signal to the servo amplifier 36 which controls the operation of the servo motor 32.

The looper 12 includes a proximity sensor 38 which is operatively connected to a programmable logic controller (PLC) 40. The PLC 40 is also operatively connected to the pump clutch 18.

It is very important that the linking chains 24, looper 12, and conveyor 14 are precisely synchronized prior to production cycles. In order to set the correct positioning relationship between the linker chains 24 and the conveyor 14, a simple homing routine is performed. The linking chains 24 first jog at a predetermined slow constant velocity, while a photoelectric fixed field sensor waits to sense a butterfly (not shown) mounted on the linking chains 24. The butterfly elements are conventional (see U.S. Patent No. 3,191,222, Figures 9 and 18). When a butterfly is sensed and passes by the sensor, a timer is started and eventually times out. When the timer times out, the linking chains are stopped with the intent of stopping a butterfly close to the twister chuck (not shown). The conveyor 14 also starts a homing routine after the linking chains 24 are finished homing.

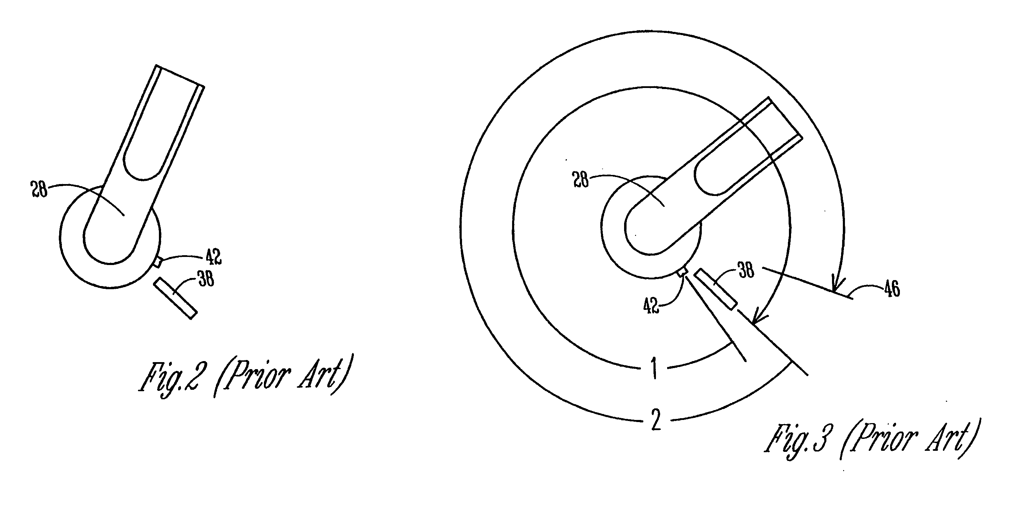

Figures 2 and 3 are diagrams of the looper 12. As shown, the looper horn 28 includes a stainless steel screw 42 which rotates along with the looper horn 28. At the beginning of the homing routine, the conveyor 14 jogs at a predetermined slow constant velocity while the sensor 38 waits to sense the passing of the stainless steel screw 42. When the screw 42 passes, a timer 41 (Figure 1) is started and eventually times out. When the timer 41 times out, the conveyor 14 and looper horn 28 are stopped. One example of this routine is illustrated in Figure 3. At the beginning of a cycle, the looper horn 28 must rotate around until the screw 42 encounters the proximity switch 38. This rotation is designated in Figure 3 as the line "1". The looper horn 28 must then rotate to the virtual home position 46 which is designated in Figure 3 as the line "2". In the example shown in Figure 3, the looper horn 28 must rotate almost two entire turns before reaching the virtual home position 46.

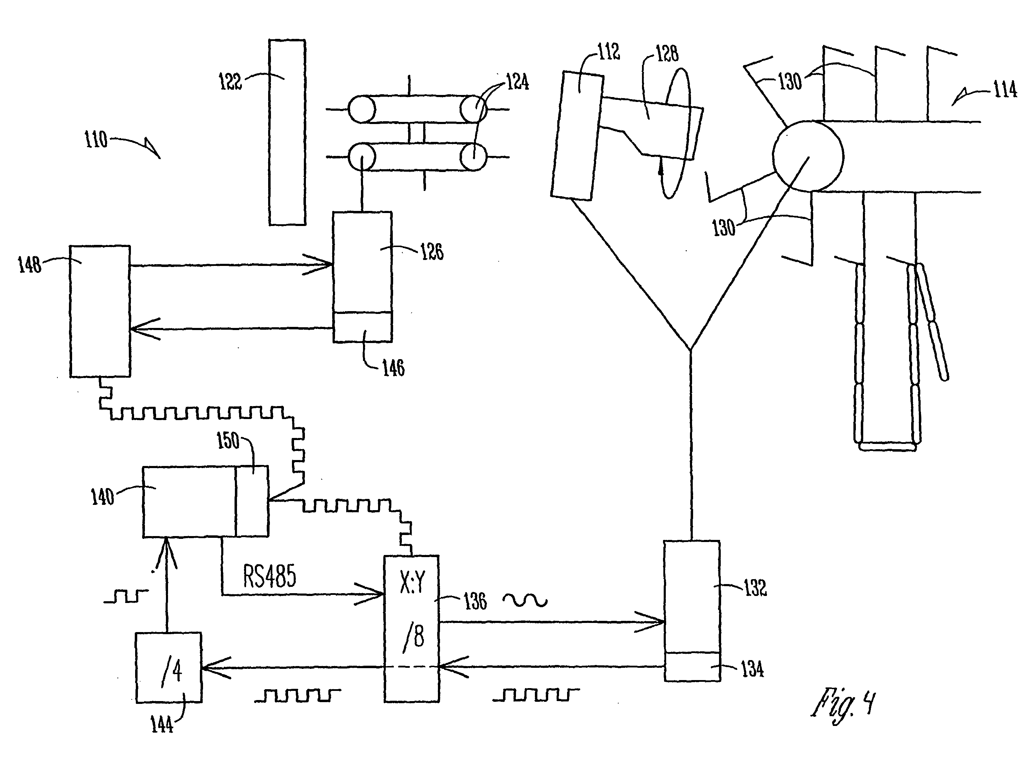

Figure 4 shows an embodiment not forming part of the present invention. Figure 4 is a diagram showing a linker 110, looper 112, and conveyor 114, which share some common components with the linker 10, looper 12, and conveyor 14, shown in Figure 1. However, the system shown in Figure 7 controls the linking chains 124, looper 112, and conveyor 114 in a different manner.

In the embodiment shown in Figure 4, there is no direct mechanical or electrical interaction between the axis of the linking chains 24 and the conveyor 14. As shown, the looper horn 128 and conveyor 114 are both controlled by the servo motor 132. Operatively coupled to the servo motor 132 is a servo encoder 134 which creates a quadrature feedback pulsed signal to the servo amplifier 136 which controls the operation of the servo motor 132.

The linking chains 124 are driven by a linker servo motor 126. As the links of meat product are linked by the linker 110, they are fed through the looper horn 128 which rotates in order to hang a predetermined number of links between a number of hooks 130 which are formed on the conveyor 114. As the horn 128 rotates, the conveyor moves so that the hooks 130 pick up a loop comprised of a predetermined number of links. Operatively coupled to the servo motor 126 is a servo encoder 146 which creates a quadrature feedback pulsed signal to a servo amplifier 148 which controls the operation of the servo motor 126. In this way, the linking chains 124 can be precisely controlled by the servo motor 126.

The feedback quadrature pulsed signal from the servo encoder 134 is preferably reduced in frequency to a level more usable by the PLC 140. To accomplish this, the servo amplifier 136 divides the pulsed signal by eight and sends the signal to a divider 144 which divides the signal by four resulting in a pulsed signal having a frequency of 1/32 of the frequency of the feedback signal from the servo encoder 134. This divided pulsed signal is then provided to the PLC 140 and used by the PLC as described below.

As stated above, there is no direct mechanical or electrical interaction between the axis of the linking chains 124 and the axis of the conveyor motor. The ratios between the axes of the linking chain and conveyor motor can be calculated using information stored in the PLC 140. In the control system shown in Figure 4, the PLC 140 will "tell" (via an RS485 communication line) the axis of the linking chains 124 to follow the pulse stream that it is sent at a one-to-one ratio. As shown, the servo amplifier 148 controls the servo motor 126 based on the frequency and number of pulses received from the PLC 140. In this example, for every pulse sent by the PLC 140 to the servo amplifier 148, the servo motor 126 will rotate 1/2000 of a resolution. The faster the pulses are sent to the servo amplifier 148 the faster the servo motor 126 will rotate. The pulse stream is generated by a module 150 connected to the PLC 140. The module 150 of the preferred embodiment is capable of generating a pulse stream of up to 100 kHz. Of course, other devices, with other capabilities could be used.

Similarly, the PLC 140 will "tell" (via the RS485 communication line) the axis of the conveyor 114 to follow the pulse stream sent by the PLC 140 at a ratio calculated to give the looper 112 one revolution for a certain set of circumstances. The ratio is calculated to give the looper 112 one revolution for every product of pitches per sausage times sausages per loop as entered by the operator. In this example, for every pulse sent, the servo amplifier 136 will first multiply by the ratio and the resulting pulses will drive the servo motor 132 1/2000 of a resolution for each ratio-ed pulse. The faster the pulses are sent the faster the motor 132 will rotate.

When the appropriate pulses have been sent to the servo amplifiers 148 and 136, each motor 126 and 132 will have accelerated, maintained velocity, decelerated, and stopped at an exact ratio of each other without any communication or linkage between the two motors 126 and 132.

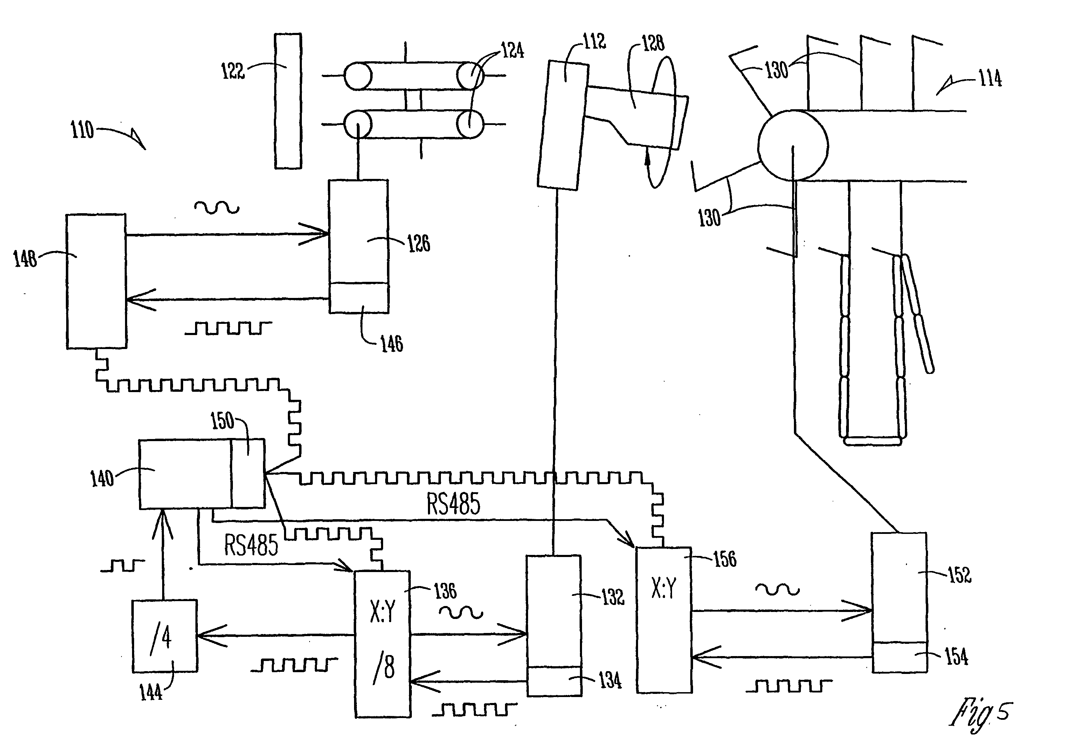

Figure 5 shows an embodiment of the present invention. Figure 5 is a diagram similar to Figure 4 showing a linker 110, looper 112, and conveyor 114. However, in the embodiment shown in Figure 5, there is no direct mechanical or electrical interaction between the linking chain axis, the conveyor chain motor axis, or the looper horn motor axis. The embodiment shown in Figure 6 is much like the two motor embodiment shown in Figure 4 except that a third servo motor 152 is used to drive the conveyor chain, while the servo motors 126 and 132 still control the linking chains 124 and the looper 112, respectively. This is in contrast to the embodiment shown in Figure 4 where the servo motor 132 controls both the looper 112 and the conveyor 114.

The servo motor 152 is operatively coupled to a servo encoder 154 which creates a quadrature feedback pulsed signal for the servo amplifier 156 which in turn controls the operation of the servo motor 152. The ratios between these three axes can be calculated using the information stored on the PLC 140 and information learned from the homing routine. For this embodiment, the hook spacing of the conveyor chain must be measured and homed similar to the looper described above.

With the embodiment of Figure 5, the system has increased flexibility. For example, the speed of the chain can be increased so that one or more hooks 130 are left empty between hanging the strand on the hooks 130. In addition, conveyor chains having different spacing can be quickly swapped. With this chain swap, the distance between the hooks 130 would be measured and also homed separately from the linker and the looper 128.

In the control system shown in Figure 5, the PLC 140 will "tell" (via the RS485 communication line) the axis of the linking chains 124 to follow the pulse stream set at a one to one ratio. Similarly, the PLC 140 will "tell" (via the RS485 communication line), the axis of the looper 128 to follow the pulse stream sent at a ratio calculated to give one looper revolution for every product of pitches per sausage times sausage per loop as entered by the operator. Therefore, for every pulse sent, the servo amplifier 136 will first multiply by the ratio and the resultant pulses will drive the servo motor 132 1/2000 of a revolution for each ratio-ed pulse. The faster the pulses are sent, the faster the motor 132 will rotate. The PLC 140 will also "tell" (via the RS485 communication line) the conveyor chain axis to follow the pulse stream sent at a ratio calculated to give one or more hooks 130 for every looper revolution. Therefore, for every pulse sent, the servo amplifier 156 will first multiply by the ratio and the resultant pulses will drive the servo motor 152 1/2000 of a revolution for each ratio-ed pulse. The faster the pulses are sent, the faster the motor 152 will rotate.

When all of the pulses have been sent, each motor 126, 132, and 152 will have accelerated, maintained velocity, decelerated, and stopped at an exact ratio of each other without any communicating between the motors.

The motors illustrated in Figures 4 and 5 are shown as servo motors which is the preferred type of motor. However, other types of precision motors could also be used. Preferably, motors are used which can be given pulses at varying frequencies to provide a very precise fraction of rotations for each pulse. Types of precision motors which could be used include, but is not limited to, servo motors, stepper motors, or flux vector motors. Each of these types of motors preferably includes an amplifier which controls the voltages and currents provided to each motor and interfaces to the outside world via the pulse stream.

The preferred embodiment of the present invention has been set forth in the drawings and specification, and although specific terms are employed, these are used in a generic or descriptive sense only and are not used for purposes of limitation. Changes in the form and proportion of parts as well as in the substitution of equivalents are contemplated as circumstances may suggest or render expedient without departing from the scope of the invention as further defined in the following claims.

## Claims

1. A meat encasing machine (110) having a meat emulsion pump, a linking assembly (124) including a rotatable looper horn (128), and a conveyor (114) with a plurality of hooks (130) thereon positioned downstream from said looper horn (128), the machine comprising: a first motor (126) having a feedback control device (148) operatively coupled to said linking assembly (124) to control the linking assembly (124); a second motor (132) having a feedback control device (136) operatively coupled to the rotatable looper horn (128) to control the looper horn (128); a third motor (152) having a feedback control device (156) operatively coupled to the conveyor (114) to control the conveyor (114); and a controller (140) operatively coupled to the first (126), second (132), and third (152) motors for controlling and synchronizing the linking assembly (124), the looper horn (128) and the conveyor (114).

2. A meat encasing machine (110) as claimed in claim 1, wherein the controller (140) is further **characterized by** a programmable logic controller.

3. A meat encasing machine (110) as claimed in any preceding claim, further characterizing a communication link between the controller (140) and the second (132) and third (152) motors, wherein the controller (140) provides a ratio to the second (132) and third (152) motors via the communication line such that the second (132) and third (152) motors are controlled to operate at a ratio relative to the first motor (126).

4. A method of synchronizing the operation of the components of a meat encasing machine (110) having a linking assembly (124), a looper horn (128), and a conveyor (114), the method **characterized by** the steps of: operatively connecting a first motor (126) having a feedback device (148) to the linking assembly (124); operatively connecting a second motor (132) having a feedback device (136) to the looper horn (128); operatively connecting a third motor (152) having a feedback device (156) to the conveyor (114); and controlling the operation of the first (126), second (132), and third (152) motors to control and synchronize the operation of the linking assembly (124), looper horn (128), and conveyor (114)

## Patentansprüche

1. Fleischumhüllungsmaschine (110) mit einer Fleischemulsionspumpe, einer Abbindevorrichtung (124), die ein rotierbares Schlaufenhorn (128) umfasst, und einem dem Schlaufenhorn (128) nachgelagerten Förderer (114) mit einer Vielzahl von Haken (130) daran , wobei die Maschine aufweist: einen ersten Motor (126) mit einer Feedback-Regeleinheit (148), die operativ mit der Abbindevorrichtung (124) verbunden ist, um die Abbindevorrichtung (124) zu regeln; einen zweiten Motor (132) mit einer Feedback-Regeleinheit (136), die operativ mit dem rotierbaren Schlaufenhorn (128) verbunden ist, um das Schlaufenhorn (128) zu regeln; einen dritten Motor (152) mit einer Feedback-Regeleinheit (156), die operativ mit dem Förderer (114) verbunden ist, um den Förderer (114) zu regeln; und einem Regler (140), der operativ mit den ersten (126), zweiten (132) und dritten (152) Motoren verbunden ist, um die Abbindevorrichtung (124), das Schlaufenhorn (128) und den Förderer (114) zu regeln und zu synchronisieren.

2. Fleischumhüllungsmaschine (110) nach Anspruch 1, bei der der Regler (140) ferner durch eine programmierbare logische Steuerungseinheit gekennzeichnet ist.

3. Fleischumhüllungsmaschine (110) nach einem der vorhergehenden Ansprüche, die weiter **gekennzeichnet ist durch** eine Kommunikationsverbindung zwischen dem Regler (140) und den zweiten (132) und dritten (152) Motoren, wobei der Regler (140) ein Verhältnis zu den zweiten (132) und dritten (152) Motoren über die Kommunikationsleitung so herstellt, dass die zweiten (132) und dritten (152) Motoren zu einem Betrieb in einem Verhältnis zum ersten Motor (126) geregelt werden.

4. Verfahren zum Synchronisieren des Betriebs der Komponenten einer Fleischumhüllungsmaschine (110) mit einer Abbindevorrichtung (124), einem Schlaufenhorn (128) und einem Förderer (114); wobei das Verfahren durch folgende Schritte gekennzeichnet ist: operatives Verbinden eines ersten Motors (126), der eine Feedback-Regeleinheit hat, mit der Abbindevorrichtung (124); operatives Verbinden eines zweiten Motors (132), der eine Feedback-Regeleinheit (136) hat, mit dem Schlaufenhorn (128); operatives Verbinden eines dritten Motors (152), der eine Feedback-Regeleinheit (156) hat, mit dem Förderer (114); und Regeln des Betriebs der ersten (126), zweiten (132) und dritten (152) Motoren zur Regelung und Synchronisation des Betriebs der Abbindevorrichtung (124), des Schlaufenhoms (128) und des Förderers (114).

## Revendications

1. Machine à enrober la viande (110) ayant une pompe à émulsion de viande, un ensemble portionneur (124) comprenant un cornet boucleur rotatif (128) et un transporteur (114) avec une pluralité de crochets (130) dessus positionné en aval dudit cornet boudeur (128), la machine comprenant : un premier moteur (126) ayant un dispositif de commande à rétroaction (148) couplé de manière opérationnelle audit ensemble portionneur (124) pour commander l'ensemble portionneur (124) ; un second moteur (132) ayant un dispositif de commande à rétroaction (136) couplé de manière opérationnelle au cornet boucleur rotatif (128) pour commander le cornet boucleur (128) ; un troisième moteur (152) ayant un dispositif de commande à rétroaction (156) couplé de manière opérationnelle au transporteur (114) pour commander le transporteur (114); et un contrôleur (140) couplé de manière opérationnelle aux premier (126), second (132) et troisième (152) moteurs pour commander et synchroniser l'ensemble portionneur (124), le cornet boudeur (128) et le transporteur (114).

2. Machine à enrober la viande (110) selon la revendication 1, dans laquelle le contrôleur (140) est en outre **caractérisé par** un automate programmable.

3. Machine à enrober la viande (110) selon l'une quelconque des revendications précédentes, caractérisant en outre une liaison de communication entre le contrôleur (140) et les second (132) et troisième (152) moteurs, dans laquelle le contrôleur (140) fournit un rapport aux second (132) et troisième (152) moteurs via la ligne de communication de sorte que les second (132) et troisième (152) moteurs sont contrôlés pour fonctionner à un rapport relativement au premier moteur (126).

4. Procédé de synchronisation du fonctionnement des composants d'une machine à enrober la viande (110) ayant un ensemble portionneur (124), un cornet boucleur (128) et un transporteur (114), le procédé étant **caractérisé par** les étapes consistant à : relier de manière opérationnelle un premier moteur (126) ayant un dispositif de rétroaction (148) à l'ensemble portionneur (124) ; relier de manière opérationnelle un second moteur (132) ayant un dispositif de rétroaction (136) au cornet boudeur (128) ; relier de manière opérationnelle un troisième moteur (152) ayant un dispositif de rétroaction (156) au transporteur (114); et contrôler le fonctionnement des premier (126), second (132) et troisième (152) moteurs pour commander et synchroniser le fonctionnement de l'ensemble portionneur (124), du cornet boudeur (128) et du transporteur (114).
